(19) Europäisches Patentamt
European Patent Office
Office européen des brevets

(11) **EP 3 484 046 A1**

(12) **EUROPÄISCHE PATENTANMELDUNG**

(43) Veröffentlichungstag:
**15.05.2019 Patentblatt 2019/20**

(51) Int Cl.:
*H02P 29/032* (2016.01)  *E05F 15/695* (2015.01)
*H02P 7/29* (2016.01)  *E05F 11/48* (2006.01)

(21) Anmeldenummer: **18199658.8**

(22) Anmeldetag: **24.01.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**13000347.8 / 2 760 129**

(27) Früher eingereichte Anmeldung:
**24.01.2013 EP 13000347**

(71) Anmelder: **Brose Fahrzeugteile GmbH & Co. Kommanditgesellschaft, Bamberg**
**96052 Bamberg (DE)**

(72) Erfinder:
• **FRANEK, Stefan**
**96269 Buchenrod (DE)**

• **THOMANN, Christian**
**96138 Burgebrach (DE)**
• **RUß, Detlef**
**96237 Ebersdorf (DE)**
• **KROMER, Alex**
**96135 Stegaurach (DE)**
• **KALB, Roland**
**96269 Rossach (DE)**
• **ÜBELEIN, Jörg**
**96271 Grub am Forst (DE)**

(74) Vertreter: **FDST Patentanwälte**
**Nordostpark 16**
**90411 Nürnberg (DE)**

Bemerkungen:
Diese Anmeldung ist am 10-10-2018 als Teilanmeldung zu der unter INID-Code 62 erwähnten Anmeldung eingereicht worden.

(54) **STELLVORRICHTUNG FÜR EIN BEWEGBARES FAHRZEUGTEIL**

(57) Es wird eine Stellvorrichtung (1) für ein bewegbares Fahrzeugteil (2) angegeben. Die Stellvorrichtung (1) umfasst einen elektrischen Stellmotor (3), eine abtriebsseitig mit dem Stellmotor (3) gekoppelte Stellmechanik (4) und eine Steuereinheit (12) zur Ansteuerung des Stellmotors (3) mit einem Motorstrom ($I_M$). Die Steuereinheit (12) ist dabei dazu eingerichtet, das Motordrehmoment (D) des Stellmotors (3) durch Begrenzung des Motorstroms ($I_M$) auf einen Drehmomentgrenzwert ($D_G$) zu begrenzen. Die Steuereinheit (12) ist zusätzlich dazu eingerichtet, die Motordrehzahl (n) des Stellmotors (3) durch Regelung der Motorspannung ($U_M$) auf einen Drehzahlsollwert ($n_S$) zu regeln.

Fig. 1

EP 3 484 046 A1

**Beschreibung**

Die Erfindung bezieht sich auf eine Stellvorrichtung für ein bewegbares Fahrzeugteil, insbesondere auf einen elektrischen Fensterheber zur Verstellung einer Fensterscheibe in einem Kraftfahrzeug, beispielsweise auf einen Seilzug-Fensterheber. Die Erfindung bezieht sich des Weiteren auf ein Verfahren zur Herstellung einer Baureihe von Stellvorrichtungen, die mehrere, unterschiedlich ausgelegte Bauformen der Stellvorrichtung umfasst.

Stellvorrichtungen werden in einem modernen Kraftfahrzeug für die automatische Verstellung von beweglichen Fahrzeugteilen unterschiedlicher Art eingesetzt. Neben den vorstehend erwähnten Fensterhebern, die der automatischen Verstellung von Fensterscheiben des Kraftfahrzeugs dienen, werden Stellvorrichtungen unter anderem auch zur Verstellung von Schiebedächern, Kraftfahrzeugtüren, Heckklappen, Spiegeln, Fahrzeugsitzen und Sitzteilen, Klappverdecken, etc. eingesetzt.

Eine Stellvorrichtung der vorstehend genannten Art umfasst üblicherweise einen elektrischen Stellmotor, eine Stellmechanik sowie eine Steuereinheit. Die Stellmechanik ist hierbei abtriebsseitig mit dem Stellmotor gekoppelt und dient zur Übertragung der von dem Stellmotor erzeugten Verstellkraft auf das zu verstellende Fahrzeugteil, um dieses entlang eines vorgegebenen Verstellweges zu bewegen. Die Stellmechanik setzt sich in der Regel zusammen aus einem Getriebe, das direkt mit der Motorwelle des Stellmotors gekoppelt ist, sowie aus Mitteln zur Kraft- und Bewegungsübertragung zwischen dem Getriebe und dem zu verstellenden Fahrzeugteil. Bei einem Seilzugfensterheber sind diese Mittel zur Kraft- und Bewegungsübertragung beispielsweise durch ein Seilzugsystem mit Wickeltrommel, Umlenkrollen, Seilzug und Mitnehmer zur Kopplung des Seilzugs mit der Fahrzeugscheibe gebildet.

Der Stellmotor und die Stellmechanik einer solchen Stellvorrichtung müssen einerseits stark bzw. stabil genug ausgelegt sein, um die im Betrieb der Stellvorrichtung zu erwartenden Belastungen über die veranschlagte Lebensdauer der Stellvorrichtung zuverlässig und beschädigungsfrei aufnehmen zu können. Andererseits sind einer Überdimensionierung der Komponenten einer Stellvorrichtung aus Gründen der Herstellungskosten und des zur Verfügung stehenden Bauraums in der Regel enge Grenzen gesetzt. Die Komponenten einer Stellvorrichtung werden deshalb üblicherweise hinsichtlich der erbringbaren Leistung und Kräfte sowie der Belastbarkeit eng auf die im Einzelfall jeweils konkret zu erwartenden Einsatzbedingungen ausgelegt.

Aus diesem Grund ist es häufig erforderlich, für verschiedene Fahrzeugtypen oder sogar verschiedene Ausstattungsvarianten ein und desselben Fahrzeugtyps unterschiedliche Bauformen einer bestimmten Stellvorrichtung, beispielsweise eines Seilzug-Fensterhebers, zu konzipieren. Hersteller von Fahrzeugkomponenten fertigen daher oftmals Baureihen, die jeweils mehrere Bauformen eines bestimmten Stellvorrichtungtyps umfassen, wobei sich die einzelnen Bauformen einer solchen Baureihe durch die Belastbarkeit der eingesetzten Komponenten unterscheiden.

Für die unterschiedlichen Bauformen einer solchen Baureihe werden üblicherweise auch unterschiedliche Stellmotoren vorgesehen, die hinsichtlich ihrer Abtriebsleistung an die Auslegung der zugehörigen Stellmechanik angepasst sind. Dies macht es erforderlich, Stellmotoren in einem abgestuften System von Leistungsklassen zu entwickeln, was zu einer Stückzahlsplittung führt und entsprechend hohe Kosten verursacht.

Aus DE 197 11 979 A1 ist ein Verfahren zur Steuerung einer Stellvorrichtung für ein bewegbares Fahrzeugteil bekannt. Hierbei wird zumindest in einem Teilbereich des Verstellweges die Verstellkraft auf einen von dem Verstellweg abhängigen Grenzwert begrenzt. Bei Überschreitung dieses Grenzwertes wird ein zu der Verstellkraft proportionaler Parameter, insbesondere der Motorstrom, auf einen dem Grenzwert entsprechenden Wert geregelt. Während dieser Regelphase wird ein mit der Dynamik der Stellvorrichtung korrelierter Parameter, insbesondere die Drehzahl überwacht und in einer Steuer- und Regelelektronik bewertet. Aus dieser Bewertung wird das weitere Steuerungs- und Regelungsverhalten generiert. Insbesondere wird dabei die Stellvorrichtung abgeschaltet oder reversiert, wenn die Drehzahl nach einer vorgegebenen Zeitspanne nach dem Beginn der Regelungsphase unter einen festgelegten Grenzwert abgefallen ist. Der für die Verstellkraft stellwegabhängig vorgegebene Grenzwert ist dabei derart gewählt, dass er die normale, d. h. im Normalbetrieb zu erwartende Verstellkraft um eine vorgegebene Überschusskraft überschreitet. Die Begrenzung der Überschusskraft dient hierbei zur Realisierung eines effektiven Einklemmschutzes. Die Überschusskraft ist deshalb so bemessen, dass sie an jedem Ort des Verstellweges auch schärfsten Einklemmschutzbedingungen genügt. Insbesondere ist sie so bemessen, dass durch das zu verstellende Fahrzeugteil eine Kraft von maximal 100 N auf ein eingeklemmtes Körperteil oder einen eingeklemmten Gegenstand ausgeübt werden kann.

Der Erfindung liegt die Aufgabe zugrunde, eine besonders rationell herstellbare Stellvorrichtung für ein bewegbares Fahrzeugteil anzugeben. Der Erfindung liegt ferner die Aufgabe zugrunde, ein besonders rationelles Verfahren zur Herstellung einer mehrere Bauformen umfassenden Baureihe von Stellvorrichtungen für ein bewegliches Fahrzeugteil anzugeben.

Bezüglich einer Stellvorrichtung für ein bewegbares Fahrzeugteil wird die Aufgabe erfindungsgemäß gelöst durch die Merkmale des Anspruchs 1. Bezüglich eines Verfahrens zur Herstellung einer mehrere Bauformen umfassenden Baureihe von Stellvorrichtungen für ein bewegbares Fahrzeugteil wird die Aufgabe erfindungsgemäß gelöst durch die Merkmale des Anspruchs 9 sowie durch die Merkmale des Anspruchs 10. Vorteilhafte und teils für sich erfinderische Ausgestaltungen und Weiterentwicklungen der Erfindung sind Gegenstand der Unteransprüche.

Die erfindungsgemäße Stellvorrichtung umfasst einen elektrischen Stellmotor sowie eine Stellmechanik, die abtriebsseitig mit dem Stellmotor gekoppelt ist und zur Bewegung des zu verstellenden Fahrzeugteils unter Wirkung eines von dem Stellmotor erzeugten Motordrehmoments dient. Die Stellvorrichtung umfasst weiterhin eine Steuereinheit zur Ansteuerung des Stellmotors mit einem Motorstrom. Die Steuereinheit ist hierbei - schaltungs- und/oder programmtechnisch - dazu eingerichtet, das Motordrehmoment durch Begrenzung des Motorstroms auf einen vorgegebenen Drehmomentgrenzwert zu begrenzen. Zusätzlich ist die Steuereinheit - schaltungs- und/oder programmtechnisch - dazu eingerichtet, die Motordrehzahl des Stellmotors durch Regelung der - dem Motorstrom zugrundeliegenden - Motorspannung auf einen Drehzahlsollwert zu regeln (Drehzahl- oder Frequenzregelung).

Als "Motordrehmoment" wird das von dem Stellmotor über die Motorwelle auf die Stellmechanik ausgeübte Drehmoment bezeichnet. Als "Motordrehzahl" wird die Drehzahl der Motorwelle bezeichnet.

Die Kombination der Drehmomentbegrenzung mit einer Drehzahlregelung erlaubt es, unzulässige Arbeitspunkte des Stellmotors, die aufgrund zu hoher Motordrehmomente oder Motordrehzahlen zu einer sofortigen oder allmählichen Schädigung der Stellmechanik führen würden, bereits durch die Motoransteuerung auszuschließen. Daher erübrigt sich bei der erfindungsgemäßen Stellvorrichtung die Notwendigkeit, den Stellmotor hinsichtlich seiner Motorkennlinie an die Belastbarkeit der Stellmechanik anzupassen. Vielmehr kann auch ein leistungsmäßig stark überdimensionierter Stellmotor im Rahmen der Stellvorrichtung eingesetzt werden, ohne Schäden an der Stellmechanik befürchten zu müssen.

Vorzugsweise ist dabei der Stellmotor derart ausgelegt, dass er bei kontinuierlicher (also zeitlich ununterbrochener, ungepulster) Ansteuerung mit einer Maximalbetriebsspannung ein Blockdrehmoment aufweist, das ein Maximallastmoment der Stellmechanik überschreitet. Der Stellmotor ist mit anderen Worten im Vergleich zu der Lastaufnahmefähigkeit der Stellmechanik überdimensioniert, so dass er ohne Drehmomentbegrenzung die Stellmechanik im Blockzustand sofort oder allmählich schädigen würde.

Als "Maximalbetriebsspannung" ist hierbei der maximale Wert der Motorspannung bezeichnet, dem die Stellvorrichtung im bestimmungsgemäßen Betrieb ausgesetzt sein kann. Vorzugsweise ist die Stellvorrichtung für die Versorgung durch eine gewöhnliche Fahrzeugbatterie mit einer Nennspannung von 12 Volt vorgesehen. Die Stellvorrichtung ist hierbei hinsichtlich der Maximalbetriebsspannung auf den höchsten Spannungswert ausgelegt, der im Batteriestromkreis unter regulären Bedingungen vorliegen kann, beispielsweise auf 16 Volt.

Als "Blockdrehmoment" ist derjenige Drehmomentwert der Drehmoment-Drehzahl-Kennlinie des Stellmotors bezeichnet, der sich bei gegebener Motorspannung und blockiertem Motor (d.h. bei Motorstillstand oder, mit anderen Worten, einem Drehzahlwert von Null) einstellt.

Als "Maximallastmoment" der Stellmechanik ist der maximale Wert des Motordrehmomentes bezeichnet, der nach der mechanischen Auslegung der Stellmechanik von dieser ohne Schädigung aufgenommen werden kann. Das Maximallastmoment der Stellmechanik ist insbesondere durch denjenigen Wert des Motordrehmomentes definiert, bei dem die Stellmechanik gerade noch einen Heat-Creep-Test besteht. Als Heat-Creep-Test wird hierbei ein standardisierter Laborversuch verstanden, bei dem eine festgelegte Anzahl von Testexemplaren der Stellvorrichtung für ein vorgesehenes (lebensdaueräquivalentes) Zeitintervall von beispielsweise 1000 Stunden dauerhaft der höchsten spezifizierten Betriebstemperatur (beispielsweise 80°C) und dabei für eine festgelegte Anzahl von beispielsweise 125 Lastzyklen dem jeweiligen Drehmoment ausgesetzt wird. Der Heat-Creep-Test gilt als bestanden, wenn alle Testexemplare die Drehmomentbeaufschlagung ohne Funktionsverlust (z.B. Bruch, Verklemmung oder Schwergängigkeit) überleben.

Um eine Überlastung der Stellmechanik durch ein unzulässig hohes Motordrehmoment sicher zu vermeiden, ist der Drehmomentgrenzwert in der Steuereinheit zweckmäßigerweise derart vorgegeben, dass er das Maximallastmoment der Stellmechanik nicht überschreitet. Mit anderen Worten ist der Drehmomentgrenzwert derart vorgegeben, dass er dem Maximallastmoment der Stellmechanik entspricht oder dieses - insbesondere geringfügig - unterschreitet. In bevorzugter Dimensionierung ist der Drehmomentgrenzwert insbesondere auf etwa 90% des Maximallastmoments der Stellmechanik festgelegt.

Im Rahmen der Erfindung kann der Drehmomentgrenzwert fest (zeitlich konstant und unveränderbar) vorgegeben sein. In einer bevorzugten Ausbildung der Erfindung ist alternativ hierzu der Drehmomentgrenzwert variabel als Funktion eines Maßes für die Stellposition des zu bewegenden Fahrzeugteils (Stellpositionsmaß) oder als Funktion der Zeit vorgegeben. Insbesondere ist der Drehmomentgrenzwert analog zu dem in DE 197 11 979 A1 beschriebenen Verfahren derart festgelegt, dass er den typischen stellwegabhängigen Drehmomentverlauf der Stellvorrichtung im eingebauten Zustand zuzüglich eines vorgegebenen Überschussdrehmoments entspricht. Abweichend von DE 197 11 979 A1 wird der Drehmomentgrenzwert allerdings unter der zusätzlichen Bedingung bestimmt, dass er das Maximallastmoment der Stellmechanik an keiner Stellposition überschreitet. Insbesondere wird im Rahmen der Erfindung eine Variation des Drehmomentgrenzwertes nur bis zu einem das Maximallastmoment der Stellmechanik geringfügig unterschreitenden Wert, z.B. 90% des Maximallastmomentes zugelassen.

Zusätzlich oder alternativ hierzu ist der Stellmotor vorzugsweise derart ausgelegt, dass er bei kontinuierlicher Ansteuerung mit der Maximalbetriebsspannung eine Leerlaufdrehzahl aufweist, die eine Maximaldrehzahl des Stellmotors oder eine Maximaldrehzahl der Stellmechanik überschreitet. Mit anderen Worten ist der Stellmotor hinsichtlich seiner elektrischen Leistungsfähigkeit gegenüber seiner eigenen mechanischen Auslegung und/oder der mechanischen Auslegung der Stellmechanik überdimensioniert, so dass er ohne die Frequenzregelung im Leerlauf oder bei geringer Belastung sich selbst oder die Stellmechanik schädigen würde.

Der Begriff "Leerlaufdrehzahl" bezeichnet hierbei in der Drehmoment-Drehzahl-Kennlinie des Stellmotors denjenigen Drehzahlwert, der sich bei gegebener Motorspannung im Leerlauf des Stellmotors, d.h. bei einem Motordrehmoment des Wertes Null einstellt.

Die "Maximaldrehzahl" des Stellmotors bezeichnet denjenigen maximalen Wert der Motordrehzahl, den der Läufer des Stellmotors und die Lager der Motorwelle gerade noch ohne Gefahr einer Beschädigung aufnehmen können. Ebenso bezeichnet die "Maximaldrehzahl" der Stellmechanik denjenigen maximalen Wert der Motordrehzahl, bei dem gerade noch keine Beschädigung der Stellmechanik zu befürchten ist. Je nach Auslegung des Stellmotors und der Stellmechanik können die Maximaldrehzahl des Stellmotors und die Maximaldrehzahl der Stellmechanik gleich oder verschieden sein. Die Maximaldrehzahl des Stellmotors und die Maximaldrehzahl der Stellmechanik werden im Rahmen der Erfindung durch Berechnung oder durch Testreihen bestimmt. Sie sind insbesondere durch diejenige Drehzahl bestimmt, für die der Stellmotor bzw. die Stellmechanik gemäß der zugehörigen Datenblätter spezifiziert sind.

Um eine Beschädigung des Stellmotors oder der Stellmechanik durch unzulässig hohe Motordrehzahlen sicher auszuschließen, ist der Drehzahlsollwert in der Steuereinheit zweckmäßigerweise derart vorgegeben, dass er die Maximaldrehzahl des Stellmotors und die Maximaldrehzahl der Stellmechanik nicht überschreitet. Mit anderen Worten ist der Drehzahlsollwert derart gewählt, dass er der Maximaldrehzahl des Stellmotors oder - wenn diese niedriger ist - der Maximaldrehzahl der Stellmechanik entspricht oder diese geringfügig unterschreitet. Beispielsweise ist der Drehzahlsollwert derart gewählt, dass er etwa 90% der Maximaldrehzahl der am schwächsten ausgelegten Komponente der Stellvorrichtung entspricht.

Vorzugsweise ist die Steuereinheit - programm- und/oder schaltungstechnisch - dazu eingerichtet, sowohl zur Begrenzung des Motordrehmoments als auch zur Regelung der Motordrehzahl die Motorspannung als pulsweitenmoduliertes Pulssignal zu erzeugen. Sowohl das Motordrehmoment als auch die Motordrehzahl werden somit durch entsprechende Pulsung der Motorspannung eingestellt.

Bei der vorstehend beschriebenen Stellvorrichtung handelt es sich bevorzugt um einen elektromotorischen Fensterheber zur Verstellung einer Fensterscheibe eines Kraftfahrzeugs, insbesondere um einen Seilzugfensterheber. Abweichend hiervon kann die Stellvorrichtung im Rahmen der Erfindung aber auch zur Verstellung beliebiger anderer Fahrzeugteile im Kraftfahrzeug vorgesehen sein, insbesondere zur Verstellung einer Fahrzeugtür, Heckklappe, eines Schiebedachs oder Fahrzeugverdecks, eines Fahrzeugsitzes oder Sitzteils, etc.

Das vorstehend beschriebene erfindungsgemäße Bauprinzip für eine Stellvorrichtung wird im Rahmen der Erfindung insbesondere zur besonders rationellen Herstellung einer Baureihe von (gleichartigen) Stellvorrichtungen genutzt. Die Baureihe umfasst hierbei mehrere Bauformen der Stellvorrichtung, die sich durch das Maximallastmoment der jeweils zugeordneten Stellmechanik unterscheiden. Trotz der unterschiedlichen Auslegung der Stellmechanik wird hierbei erfindungsgemäß für alle Bauformen der Baureihe stets der gleiche Stellmotor herangezogen. Alle Bauformen enthalten somit identische Stellmotoren. Dieser Stellmotor wird hierbei derart ausgelegt, dass er für mindestens eine Bauform der Baureihe hinsichtlich des erzeugbaren Motordrehmoments überdimensioniert ist, dass er also bei kontinuierlicher Ansteuerung mit der Maximalbetriebsspannung ein Blockdrehmoment aufweist, das das Maximallastmoment der Stellmechanik dieser mindestens einen Bauform übersteigt. Eine Beschädigung der Stellmechanik wird hierbei durch die in der Steuermechanik implementierte Drehmomentbegrenzung verhindert, indem diese dazu eingerichtet wird, das Motordrehmoment des Stellmotors durch Begrenzung des Motorstroms auf einen Drehmomentgrenzwert zu begrenzen, der für jede Bauform spezifisch derart vorgegeben wird, dass er das Maximallastmoment der Stellmechanik dieser Bauform nicht überschreitet.

Zusätzlich oder alternativ hierzu unterscheiden sich die Bauformen der Baureihe durch die Maximaldrehzahl der jeweils zugeordneten Stellmechanik. Der - wiederum für alle Bauformen der Baureihe gleiche - Stellmotor wird hierbei erfindungsgemäß derart ausgelegt, dass er hinsichtlich seiner Leerlaufdrehzahl gegenüber der mechanischen Auslegung der Stellmechanik mindestens einer Bauform überdimensioniert ist, dass er also bei kontinuierlicher Ansteuerung mit der Maximalbetriebsspannung eine Leerlaufdrehzahl aufweist, die die Maximaldrehzahl der Stellmechanik mindestens dieser einen Bauform überschreitet. Eine Schädigung der Stellmechanik wird hierbei durch die in der Steuereinheit implementierte Drehzahlregelung vermieden, indem die Steuereinheit dazu eingerichtet wird, die Motordrehzahl des Stellmotors durch Regelung der Motorspannung auf einen Drehzahlsollwert zu regeln, der für jede Bauform spezifisch derart vorgegeben ist, dass er die Maximaldrehzahl der Stellmechanik dieser Bauform nicht überschreitet.

In alternativer Beschreibung des vorstehend erläuterten Bauprinzips wird die Aufgabe gelöst durch die Verwendung gleicher Stellmotoren für mehrere Stellvorrichtungen der vorstehend beschriebenen Art, insbesondere mehrere Bauformen einer Baureihe von Stellvorrichtungen, wobei diese Stellvorrichtungen hinsichtlich des Maximallastmoments und/oder der Maximaldrehzahl der jeweils zugeordneten Stellmechanik verschieden ausgelegt sind.

Nachfolgend wird ein Ausführungsbeispiel der Erfindung anhand einer Zeichnung näher erläutert. Darin zeigen:

Fig. 1    in einem schematischen Blockschaltbild einen elektrischen Fensterheber zur Verstellung einer Kraftfahrzeug-Seitenscheibe mit einem elektrischen Stellmotor, einer Stellmechanik zur Übertragung des von dem Stellmotor erzeugten Drehmoments auf die Fahrzeugscheibe sowie mit einer Steuereinheit zur Ansteuerung des Stellmotors mit einem Motorstrom, und

Fig. 2    in einem schematischen Blockschaltbild den Aufbau der Steuereinheit gemäß Fig. 1,

Fig. 3    in einem schematischen Diagramm der Motordrehzahl gegen das Motordrehmoment den typischen Verlauf der Drehmoment-Drehzahl-Kennlinie des Stellmotors für verschiedene Beträge der Motorspannung, und

Fig. 4    in einem schematischen Diagramm des Motordrehmoments gegen die Stellposition den zu erwartenden Verlauf des Motordrehmoments während eines Stellvorgangs und einen der Steuereinheit vorgegebenen Drehmomentgrenzwert.

Einander entsprechende Teile und Größen sind in allen Figuren stets mit gleichen Bezugszeichen versehen.

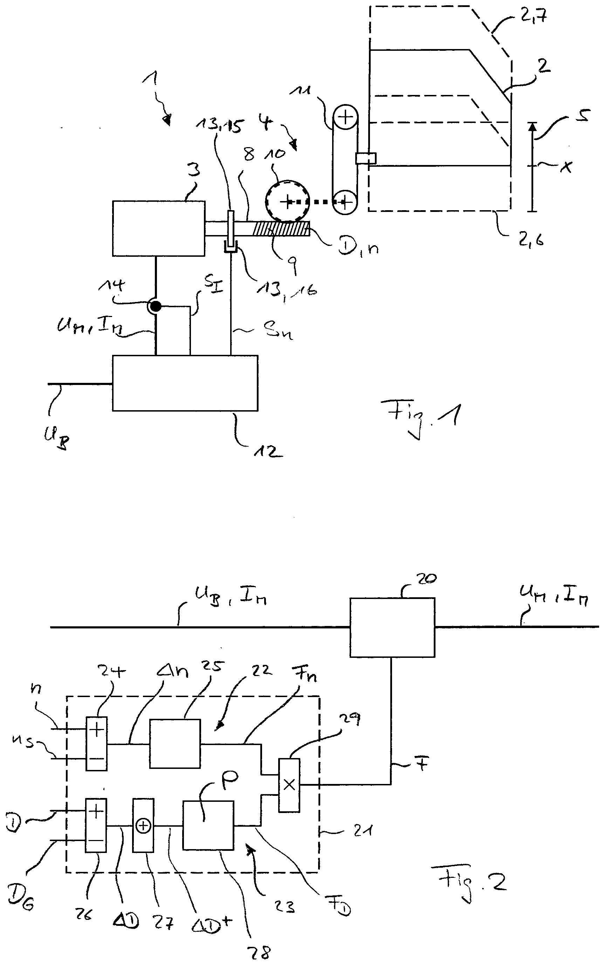

Fig. 1 zeigt schematisch eine Stellvorrichtung in Form eines (Seilzug-)Fensterhebers 1 für eine (Fahrzeug-)Fensterscheibe 2 eines Kraftfahrzeugs.

Der Fensterheber 1 umfasst einen elektrischen Stellmotor 3, der über eine Stellmechanik 4 derart mit der Fensterscheibe 2 gekoppelt ist, dass die Fensterscheibe 2 durch den Stellmotor 3 entlang eines Verstellweges 5 zwischen zwei Endstellungen, nämlich einer Öffnungsstellung 6 und einer Schließstellung 7 reversibel verfahrbar ist.

Fig. 1 zeigt die Fensterscheibe 2 in der Öffnungsstellung 6 und der Schließstellung 7 jeweils mit gestrichelter Umrisslinie. Mit durchgezogener Umrisslinie ist die Fensterscheibe 2 in einer mittleren Stellposition x zwischen den beiden Endstellungen dargestellt.

Die Stellmechanik 4 umfasst eine auf einer Motorwelle 8 des Stellmotors 3 aufgebrachte Antriebsschnecke 9, die mit einem Schneckenrad 10 kämmt. Die Stellmechanik 4 umfasst des Weiteren einen - in Fig. 1 nur stark vereinfacht angedeuteten - Seilzug 11, der mit dem Schneckenrad 10 über (nicht näher dargestellte) Getriebeteile und eine Wickeltrommel gekoppelt ist. Mittels eines Mitnehmers ist der Seilzug 11 wiederum mit der Fensterscheibe 2 gekoppelt.

Die Stellvorrichtung 1 umfasst weiterhin eine Steuereinheit 12, einen Drehstellungssensor 13 sowie einen Stromsensor 14. Der Drehstellungssensor 13 umfasst einen auf der Motorwelle 8 drehfest aufgebrachten, mehrpoligen Ringmagneten 15 sowie eine mit diesem zusammenwirkenden Hall-Sensor 16.

Zur Durchführung eines Stellvorgangs steuert die - ihrerseits aus einer Fahrzeugbatterie mit einer Batteriespannung $U_B$ versorgte - Steuereinheit 12 den Stellmotor 3 mit einem Motorstrom $I_M$ an, aufgrund dessen der Stellmotor 3 über die Motorwelle 8 ein Motordrehmoment D auf die Stellmechanik 4 ausübt. Durch den Stromsensor 14 wird hierbei ein zur Stromstärke des Motorstroms $I_M$ proportionales Strommesssignal $S_I$ erzeugt und der Steuereinheit 12 als Eingangsgröße zugeführt.

Bei Drehung der Motorwelle 8 erzeugt der damit gekoppelte Ringmagnet 15 im Zusammenwirkung mit dem Hall-Sensor 16 ein gepulstes Drehzahlmesssignal $S_n$, dessen Pulsrate proportional zu der (Motor-)Drehzahl n ist und führt dieses Drehzahlmesssignal $S_n$ der Steuereinheit 12 als weitere Eingangsgröße zu.

Die Steuereinheit 12 berechnet aus dem Strommesssignal $S_I$ anhand der hinterlegten Strom-Drehmoment-Kennlinie des Stellmotors 3 fortlaufend den (Ist-)Wert des vom Stellmotor 3 erzeugten (Motor-)Drehmoments D sowie anhand des Drehzahlmesssignals $S_n$ den (Ist-)Wert der Motordrehzahl n.

Der Aufbau der Steuereinheit 12 ist in Fig. 2 näher dargestellt. Aus dieser Darstellung ist erkennbar, dass die Steuereinheit 12 ein PWM-Schaltmodul 20 sowie einen Regelkreis 21 zur Ansteuerung des PWM-Schaltmoduls 20 aufweist. Der Regelkreis 21 umfasst zwei Signalflusszweige, nämlich einen Frequenzregelkreis 22 und einen Drehmomentbegrenzungszweig 23.

In dem Frequenzregelkreis 22 wird der Istwert der Drehzahl n in einem Differenzglied 24 fortlaufend mit einem (Drehzahl-)Sollwert $n_S$ verglichen. Das Differenzglied 24 erzeugt hierbei ein Differenzsignal $\Delta n$, das zu der Differenz des Sollwerts $n_S$ von der Drehzahl n proportional ist, und gibt dieses Differenzsignal $\Delta n$ an einen nachgeschalteten Proportional-Integral-Regler (nachfolgend kurz PI-Regler 25) ab. Der PI-Regler 25 gibt in Abhängigkeit des zeitlichen Verlaufs des Differenzsignals $\Delta n$ ein - beispielsweise zwischen den Werten 0 und 1 variierendes - Stellsignal $F_n$ aus.

In dem Drehmomentbegrenzungszweig 23 wird der aktuelle (Ist-)Wert des Drehmoments D in einem Differenzglied 26 fortlaufend mit einem vorgegebenen (Drehmoment-)Grenzwert $D_G$ verglichen. Das Differenzglied 26 erzeugt hierbei ein Differenzsignal $\Delta D$, das zu der Differenz des Grenzwerts $D_G$ von dem Drehmoment D proportional ist, und gibt dieses Differenzsignal $\Delta D$ an ein nachgeschaltetes Filtermodul 27 weiter. Das Filtermodul 27 hat die Eigenschaft, dass es negative Werte des Differenzsignals $\Delta D$ unterdrückt. Ein von dem Filtermodul 27 augegebenes modifiziertes Differenzsignal $\Delta D^+$ hat somit stets den Wert des Differenzsignals $\Delta D$, sofern der aktuelle Istwert des Drehmoments D den Grenzwert $D_G$ übersteigt ($D > D_G$) und somit der Wert des Differenzsignals $\Delta D$ positiv ist. Ansonsten ($D \leq D_G$) hat das modifizierte Differenzsignal $\Delta D^+$ den Wert 0. Das Differenzsignal $\Delta D^+$ wird einem an einen nachgeschalteten Proportionalregler (nachfolgend kurz P-Regler 28) zugeführt. Der P-Regler 28 erzeugt ein zweites Stellsignal $F_D$, das negativ proportional zu dem modifizierten Differenzsignal $\Delta D^+$ ist:

$$F_D = \begin{cases} 1 - P \cdot \Delta D^+ & \text{wenn} \quad \Delta D^+ < 1/P \\ 0 & \text{sonst} \end{cases} \qquad \text{Glg. 1}$$

Das Stellsignal $F_D$ hat somit den Wert 1, wenn das Differenzsignal $\Delta D^+$ den Wert 0 hat und sinkt mit zunehmendem Wert des Differenzsignals $\Delta D^+$ von dem Wert 1 bis auf den Wert 0 ab. Der Regelparameter P in Glg. 1 ist hierbei durch Berechnung oder Versuche bestimmt und dem P-Regler 28 als Konstante vorgegeben. Optional ist vorgesehen, dass der Regelparameter P durch den Fahrzeughersteller geändert werden kann. Gleiches gilt für die - hier nicht näher bezeichneten - Regelparameter des PI-Reglers 25.

Die Stellsignale $F_n$ und $F_D$ werden in einem Multiplikationsglied 29 des Regelkreises 21 multipliziert. Ein hieraus resultierendes (Gesamt-)Stellsignal F wird von dem Regelkreis 21 an das PWM-Schaltmodul 20 ausgegeben.

Das PWM-Schaltmodul 20 erzeugt aus der zugeführten Batteriespannung $U_B$ ein pulsweitenmoduliertes Spannungssignal, das als Motorspannung $U_M$ zur Erzeugung des Motorstroms $I_M$ an den Stellmotor 3 angelegt wird. Das PWM-Schaltmodul 20 erzeugt die Motorspannung $U_M$ hierbei mit einer Pulsweite, die dem zwischen den Werten 0 und 1 variierenden Wert des Stellsignal F entspricht. Als Pulsweite wird hierbei das Verhältnis der Pulsdauer zu der Taktzeit in jedem Takt der pulsweitenmodulierten Motorspannung $U_M$ bezeichnet.

Die Motorspannung $U_M$ wird somit durch das PWM-Schaltmodul 20 als kontinuierliche (zeitlich unterbrochene) Gleichspannung mit einem der Batteriespannung $U_B$ entsprechenden Wert ($U_M = U_B$) erzeugt, wenn das Stellsignal F den Wert 1 hat, während die Motorspannung $U_M$ als Null-Spannung ($U_M = 0$) erzeugt wird, wenn das Stellsignal F den Wert 0 hat.

Der Regelkreis 21 ist vorzugweise als Software implementiert, die auf einem Mikrocontroller der Steuereinheit 12 lauffähig implementiert ist. Der Regelkreis 21 kann alternativ aber auch durch einen digitalen oder anlogen elektronischen Hardware-Schaltkreis gebildet sein.

Durch den Frequenzregelungszweig 22 des Regelkreises 21 werden das Stellsignal F und damit die zeitgemittelte Motorspannung $U_M$ derart verändert, dass die Drehzahl n des Stellmotors 3 weitestmöglich an den Sollwert $n_s$ angeglichen wird. Durch den Drehmomentenbegrenzungszweig 23 des Regelkreises 21 werden das Stellsignal F - und damit der Motorstrom $I_M$ - erniedrigt, wenn das Drehmoment D des Stellmotors 3 den Grenzwert $D_G$ überschreitet, um das Drehmoment D auf den Grenzwert $D_G$ zu reduzieren. Somit bewirkt der Regelkreis 21 eine Frequenzregelung des Stellmotors 3 in Kombination mit einer Dremomentbegrenzung.

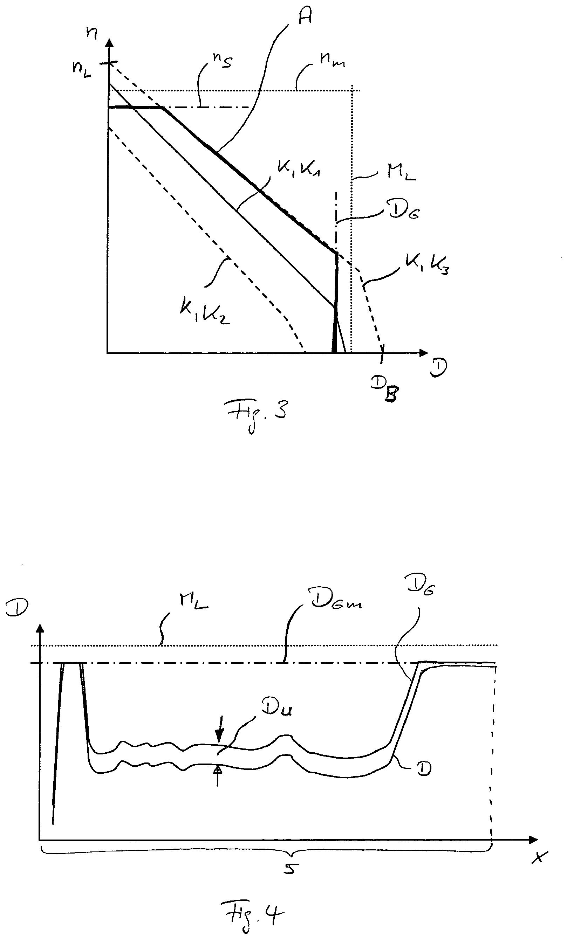

Diese Wirkung ist in Fig. 3 anhand der schematisch dargestellten Drehzahl-Drehmoment-Kennlinie K des Stellmotors 3 bei konstanter Motorspannung $U_M$ in einem Diagramm der Drehzahl n gegen das Drehmoment D dargestellt. Fig. 3 zeigt hierbei den Verlauf der Kennlinie K für drei Beträge der Motorspannung $U_M$. Hierbei wird stets von einem kontinuierlichen (ungepulsten) Betrieb des Stellmotors 3 ausgegangen, so dass die Motorspannung $U_M$ der Batteriespannung $U_B$ entspricht ($U_M = U_B$). So ist in Fig. 3 mit durchgezogener Linie ein Verlauf $K_1$ der Kennlinie K bei der Nennspannung der Fahrzeugbatterie ($U_M = U_B = 12V$) angetragen. Mit gestrichelten Linien ist dagegen der Verlauf $K_2$ der Kennlinie K bei einer Minimalbetriebsspannung des Stellmotors 3 ($U_M = U_B = 9V$) bzw. der Verlauf $K_2$ der Kennlinie K bei einer Maximalbetriebsspannung des Stellmotors 3 ($U_M = U_B = 16V$) angetragen.

Aus der Fig. 3 ist zu erkennen, dass die Kennlinie K für alle Werte der Motorspannung stets monoton abfällt. Den höchsten Drehzahlwert erreicht der Stellmotor 3 demnach bei verschwindendem Drehmoment D ($D = 0$). Dieser Punkt der Kennlinie K ist auch als Leerlaufdrehzahl $n_L$ bezeichnet. Das größte Drehmoment D übt der Stellmotor dagegen bei verschwindender Drehzahl ($n = 0$) aus. Dieser Punkt der Kennlinie K ist nachfolgend als Blockmoment $D_B$ bezeichnet. In Fig. 3 sind die Leerlaufdrehzahl $n_L$ und das Blockmoment $D_B$ nur für den der Maximalbetriebsspannung entsprechenden Verlauf $K_3$ der Kennlinie K eingetragen. Nur von diesem Fall wird nachfolgend ausgegangen. Die Größen $n_L$ und $D_B$ bezeichnen somit die Leerlaufdrehzahl bzw. das Blockmoment für den Fall, dass die Motorspannung $U_M$ der Maximalbetriebsspannung von 16Volt entspricht.

In Fig. 3 sind mit gepunkteten Linien weiterhin das Maximallastmoment $M_L$ der Stellmechanik 4 und die Maximaldrehzahl $n_m$ der am schwächsten ausgelegten Komponente des Fensterhebers 1 angetragen. Im Folgenden wird exemplarisch davon ausgegangen, dass die Größe $n_m$ die Maximaldrehzahl der Stellmechanik 4 bezeichnet, und dass der Stellmotor 3 für eine gleiche oder höhere Maximaldrehzahl ausgelegt ist.

Anhand der Kennlinie K ist hierbei zu erkennen, dass der Stellmotor 3 hinsichtlich seiner elektrischen Antriebsleistung im Vergleich zu der mechanischen Auslegung der Stellmechanik 4 überdimensioniert ist, insofern als zumindest bei einer der Maximalbetriebsspannung entsprechenden Motorspannung $U_M$ (gemäß dem Verlauf $K_3$ der Kennlinie K) das Blockmoment $D_B$ des Stellmotors 3 das Maximallastmoment $M_L$ der Stellmechanik 4 übersteigt. Zusätzlich übersteigt in diesem Fall auch die Leerlaufdrehzahl $n_L$ die Maximaldrehzahl $n_M$ der Stellmechanik 4.

Um eine Schädigung der Stellmechanik 4 bei abtriebsseitig blockierter Stellmechanik 4 zu vermeiden, ist der Drehzahlgrenzwert $D_G$ gemäß Fig. 3 derart gewählt, dass er das Maximallastmoment $M_L$ der Stellmechanik 4 geringfügig unterschreitet. Beispielsweise ist der Grenzwert $D_G$ auf 90% des Maximallastmomentes $M_L$ gesetzt.

EP 3 484 046 A1

Ebenso ist, um eine Beschädigung der Stellmechanik 4 bei geringer Belastung des Stellmotors 3 (Quasi - Leerlauf) zu vermeiden, der Drehzahlsollwert $n_S$ geringfügig kleiner gewählt als die Maximaldrehzahl $n_L$ der Stellmechanik 4. Beispielsweise ist der Sollwert $n_S$ auf 90% der Maximaldrehzahl $n_L$ festgesetzt.

Im Betrieb des Stellmotors 3 wird der Arbeitspunkt des Stellmotors 3 daher durch den Regelkreis 21 auf einer in Fig. 3 mit durchgezogener Linie eingetragene Arbeitspunktlinie A gehalten, die durch die Solldrehzahl $n_S$, den Drehmomentgrenzwert $D_G$ und ggf. den dazwischenliegenden Teil des Verlaufs $K_3$ der Kennlinie K gebildet ist.

Abweichend von dem anhand von Fig. 3 dargestellten Fall, in dem der Drehmomentgrenzwert $D_G$ konstant vorgegeben ist, wird der Drehmomentgrenzwert $D_G$ in einer anhand von Fig. 4 dargestellten Variante des Fensterhebers 1 in Abhängigkeit der Stellposition x nach dem grundsätzlich in DE 197 11 979 A1 beschriebenen Verfahren variiert. Anstelle der tatsächlichen Stellposition x kann hierbei die funktionale Abhängigkeit des Drehmomentgrenzwertes $D_G$ auch in Abhängigkeit einer beliebigen anderen, mit der Stellposition x korrelierenden Größe definiert sein, beispielsweise in Abhängigkeit des Gesamtumdrehungswinkels der Motorwelle 8 während eines Stellvorgangs.

Fig. 4 zeigt die typische Abhängigkeit des Drehmomentgrenzwerts $D_G$ während eines Stellvorgangs in Gegenüberstellung zu dem im ordnungsgemäßen Betrieb des Fensterhebers 1 zu erwartenden Verlauf des Drehmoments D. Zu erkennen ist in Fig. 4 dabei insbesondere, dass der Grenzwert $D_G$ gemäß der Lehre der DE 197 11 979 A1 über den weitesten Bereich des Stellwegs 5 durch den zu erwartenden Verlauf des Drehmoments D zuzüglich einer vorgegebenen Überschusskraft $D_U$ gebildet ist. Abweichend von dem in DE 197 11 979 A1 beschriebenen Verfahren wird der Grenzwert $D_G$ aber bei dem Fensterheber 1 stets auf einen Maximalwert $D_{Gm}$ begrenzt, der das Maximallastmoment $M_L$ der Stellmechanik 4 nicht überschreitet oder dieses - wie in Fig. 4 dargestellt - geringfügig unterschreitet. Aufgrund dieser Begrenzung des Grenzwertes $D_G$ bewirkt der Regelkreis 21, dass auch der tatsächliche Verlauf des Drehmoments D den Maximalwert $D_{Gm}$ nicht überschreitet.

Das vorstehend beschriebene Bauprinzip wird vorzugsweise auf eine Baureihe von verschiedenen Bauformen des Fensterhebers 1 angewendet, wobei sich die einzelnen Bauformen dieser Baureihe durch die mechanische Auslegung der jeweiligen Stellmechanik 4 unterscheiden, wohingegen für alle Bauformen der gleiche Stellmotor 3 herangezogen wird.

In einer beispielhaften Ausführung umfasst die Baureihe vier Bauformen des Fensterhebers 1, deren jeweilige Stellmechanik 4 wie folgt ausgelegt ist:

Tab.1

| Bauformbezeichnung | Maximallastmoment $M_L$ der Stellmechanik 4 | Maximaldrehzahl $n_m$ der Stellmechanik 4 |
|---|---|---|
| Typ A | 8 Nm | 80 Us$^{-1}$ |
| Typ B | 10 Nm | 80 Us$^{-1}$ |
| Typ C | 12 Nm | 78 Us$^{-1}$ |
| Typ D | 14 Nm | 78 Us$^{-1}$ |

Der für alle Bauformen der Baureihe gleiche Stellmotor 3 ist wie folgt ausgelegt:

- Blockmoment $D_B$ bei Maximalbetriebsspannung von 16 V: 20 Nm
- Leerlaufdrehzahl $n_L$ bei Maximalbetriebsspannung von 16 V: 120 Us$^{-1}$
- Zulässige Maximaldrehzahl: 80 Us$^{-1}$

Hinsichtlich seiner elektrischen Leistungsfähigkeit ist der Stellmotor 3 somit in Hinblick auf die mechanische Auslegung der jeweiligen Stellmechanik 4 aller Bauformen der Baureihe überdimensioniert. Des Weiteren ist der Stellmotor 3 hinsichtlich seiner elektrischen Leistungsfähigkeit auch gegenüber seiner eigenen mechanischen Auslegung überdimensioniert.

Der Drehmomentgrenzwert $D_G$ (oder, falls der Drehmomentgrenzwert $D_G$ als stellpositionsabhängige Funktion definiert ist, dessen Maximalwert $D_{Gm}$) und der Drehzahlsollwert $n_S$ sind für die einzelnen Bauformen wie folgt festgelegt:

Tab. 2

| Bauformbezeichnung | Drehmomentgrenzwert $D_G$ bzw. Maximalwert $D_{Gm}$ | Drehzahlsollwert $n_S$ |
|---|---|---|
| Typ A | 7,5 Nm | 60 Us$^{-1}$ |
| Typ B | 9,5 Nm | 60 Us$^{-1}$ |
| Typ C | 11 Nm | 60 Us$^{-1}$ |

7

(fortgesetzt)

| Bauformbezeichnung | Drehmomentgrenzwert $D_G$ bzw. Maximalwert $D_{Gm}$ | Drehzahlsollwert $n_S$ |
|---|---|---|
| Typ D | 13 Nm | 60 Us$^{-1}$ |

Somit wird bei allen Bauformen eine Überbelastung der jeweiligen Stellmechanik 4 oder des Stellmotors 3 ausgeschlossen.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

Bezugszeichenliste

| | | | |
|---|---|---|---|
| 1 | (Seilzug-)Fensterheber | n | (Motor-)Drehzahl |
| 2 | (Fahrzeug-)Fensterscheibe | $n_m$ | Maximaldrehzahl |
| 3 | Stellmotor | $n_L$ | Leerlaufdrehzahl |
| 4 | Stellmechanik | $n_S$ | (Drehzahl-)Sollwert |
| 5 | Verstellweg | x | Stellposition |
| 6 | Öffnungsstellung | A | Arbeitspunktlinie |
| 7 | Schließstellung | D | (Motor-)Drehmoment |
| 8 | Motorwelle | $D_B$ | Blockmoment |
| 9 | Antriebsschnecke | $D_G$ | (Drehmoment-)Grenzwert |
| 10 | Schneckenrad | $D_{Gm}$ | Maximalwert |
| 11 | Seilzug | $D_U$ | Überschusskraft |
| 12 | Steuereinheit | F | (Gesamt-)Stellsignal |
| 13 | Drehstellungssensor | $F_n$ | Stellsignal |
| 14 | Stromsensor | $F_D$ | Stellsignal |
| 15 | Ringmagnet | $I_M$ | Motorstrom |
| 16 | Hall-Sensor | K | (Drehzahl-Drehmoment-)Kennlinie |
| 20 | PWM-Schaltmodul | | |
| 21 | Regelkreis | $K_1$ | Verlauf |
| 22 | Frequenzregelzweig | $K_2$ | Verlauf |
| 23 | Drehmomentbegrenzungs-zweig | $K_3$ | Verlauf |
| | | $M_L$ | Maximallastmoment |
| 24 | Differenzglied | P | Regelparameter |
| 25 | PI-Regler | $S_n$ | Drehzahlmesssignal |
| 26 | Differenzglied | $S_I$ | Strommesssignal |
| 27 | Filtermodul | $U_B$ | Batteriespannung |
| 28 | P-Regler | $U_M$ | Motorspannung |
| 29 | Multiplikationsglied | | |
| | | | |
| $\Delta n$ | Differenzsignal | | |
| $\Delta D$ | Differenzsignal | | |
| $\Delta D^+$ | Differenzsignal | | |

**Patentansprüche**

1. Stellvorrichtung (1) für ein bewegbares Fahrzeugteil (2), mit einem elektrischen Stellmotor (3), mit einer abtriebsseitig mit dem Stellmotor (3) gekoppelten Stellmechanik (4) und mit einer Steuereinheit (12) zur Ansteuerung des Stellmotors (3) mit einem Motorstrom ($I_M$), wobei die Steuereinheit (12) dazu eingerichtet ist, das Motordrehmoment (D) des Stellmotors (3) durch Begrenzung des Motorstroms ($I_M$) auf einen Drehmomentgrenzwert ($D_G$) zu begrenzen, **dadurch gekennzeichnet,**
**dass** die Steuereinheit (12) zusätzlich dazu eingerichtet ist, die Motordrehzahl (n) des Stellmotors (3) durch Regelung

8

der Motorspannung ($U_M$) auf einen Drehzahlsollwert ($n_S$) zu regeln.

2. Stellvorrichtung (1) nach Anspruch 1,
**dadurch gekennzeichnet,**
**dass** der Stellmotor (3) derart ausgelegt ist, dass er bei kontinuierlicher Ansteuerung mit einer Maximalbetriebsspannung ein Blockdrehmoment ($D_B$) aufweist, das ein Maximallastmoment ($M_L$) der Stellmechanik (4) überschreitet.

3. Stellvorrichtung (1) nach Anspruch 2,
**dadurch gekennzeichnet,**
**dass** der Steuereinheit (12) der Drehmomentgrenzwert ($D_G$) derart vorgegeben ist, dass er das Maximallastmoment ($M_L$) der Stellmechanik (4) nicht überschreitet.

4. Stellvorrichtung (1) nach Anspruch 3,
**dadurch gekennzeichnet,**
**dass** der Drehmomentgrenzwert ($D_G$) variabel als Funktion eines Stellpositionsmaßes (x) oder als Funktion der Zeit vorgegeben ist.

5. Stellvorrichtung (1) nach einem der Ansprüche 1 bis 4,
**dadurch gekennzeichnet,**
**dass** der Stellmotor (3) derart ausgelegt ist, dass er bei kontinuierlicher Ansteuerung mit einer Maximalbetriebsspannung eine Leerlaufdrehzahl ($n_L$) aufweist, die eine Maximaldrehzahl des Stellmotors (3) oder eine Maximaldrehzahl ($n_m$) der Stellmechanik (4) überschreitet.

6. Stellvorrichtung (1) nach Anspruch 5,
**dadurch gekennzeichnet,**
**dass** der Steuereinheit (12) der Drehzahlsollwert ($n_S$) derart vorgegeben ist, dass er die Maximaldrehzahl ($n_m$) des Stellmotors (3) oder die Maximaldrehzahl ($n_m$) der Stellmechanik (4) nicht überschreitet.

7. Stellvorrichtung (1) nach einem der Ansprüche 1 bis 6,
**dadurch gekennzeichnet,**
**dass** die Steuereinheit (12) dazu eingerichtet ist, sowohl zur Begrenzung des Motordrehmoments (D) als auch zur Regelung der Motordrehzahl (n) die Motorspannung ($U_M$) als pulsweitenmoduliertes Pulssignal zu erzeugen.

8. Stellvorrichtung (1) nach einem der Ansprüche 1 bis 7,
**dadurch gekennzeichnet,**
**dass** die Steuereinheit (12) in einem Motorgehäuse des Stellmotors (3) integriert ist.

9. Verfahren zur Herstellung einer mehrere Bauformen umfassenden Baureihe von Stellvorrichtungen (1) für ein bewegbares Fahrzeugteil (2),

- wobei jede Bauform einen elektrischen Stellmotor (3), eine abtriebsseitig mit dem Stellmotor (3) gekoppelte Stellmechanik (4) und eine Steuereinheit (12) zur Ansteuerung des Stellmotors (3) mit einem Motorstrom ($I_M$) umfasst,
- wobei sich die Bauformen der Baureihe durch das Maximallastmoment ($M_L$) der jeweils zugeordneten Stellmechanik (4) unterscheiden,
- wobei für alle Bauformen der Baureihe der gleiche Stellmotor (3) herangezogen wird, der derart ausgelegt wird, dass er bei kontinuierlicher Ansteuerung mit einer Maximalbetriebsspannung ein Blockdrehmoment ($D_B$) aufweist, das ein Maximallastmoment ($M_L$) der Stellmechanik (4) mindestens einer Bauform übersteigt, und
- wobei die Steuereinheit (12) dazu eingerichtet wird, das Motordrehmoment (D) des Stellmotors (3) durch Begrenzung des Motorstroms ($I_M$) auf einen Drehmomentgrenzwert ($D_G$) zu begrenzen, der für jede Bauform spezifisch derart vorgegeben wird, dass er das Maximallastmoment ($M_L$) der Stellmechanik (4) dieser Bauform nicht überschreitet.

10. Verfahren zur Herstellung einer mehrere Bauformen umfassenden Baureihe von Stellvorrichtungen (1) für ein bewegbares Fahrzeugteil (2),

- wobei jede Bauform einen elektrischen Stellmotor (3), eine abtriebsseitig mit dem Stellmotor (3) gekoppelte Stellmechanik (4) und eine Steuereinheit (12) zur Ansteuerung des Stellmotors (3) mit einem Motorstrom ($I_M$)

umfasst,

- wobei sich die Bauformen der Baureihe durch die Maximaldrehzahl (n) der jeweils zugeordneten Stellmechanik (4) unterscheiden,

- wobei für alle Bauformen der Baureihe der gleiche Stellmotor (3) herangezogen wird, der derart ausgelegt wird, dass er bei kontinuierlicher Ansteuerung mit einer Maximalbetriebsspannung eine Leerlaufdrehzahl ($n_L$) aufweist, die die Maximaldrehzahl ($n_m$) der Stellmechanik (4) mindestens einer Bauform überschreitet, und

- wobei die Steuereinheit (12) dazu eingerichtet wird, die Motordrehzahl (n) des Stellmotors (3) durch Regelung der Motorspannung ($U_M$) auf einen Drehzahlsollwert ($n_S$) zu regeln, der für jede Bauform spezifisch derart vorgegeben wird, dass er die Maximaldrehzahl ($n_m$) der Stellmechanik (4) dieser Bauform nicht überschreitet.

11. Verfahren nach Anspruch 9 oder 10,

- wobei der Stellmotor (3) derart ausgelegt wird, dass er bei kontinuierlicher Ansteuerung mit einer Maximalbetriebsspannung eine Leerlaufdrehzahl ($n_L$) aufweist, die die Maximaldrehzahl des Stellmotors (3) überschreitet, und

- wobei die Steuereinheit (12) dazu eingerichtet wird, die Motordrehzahl (n) des Stellmotors (3) durch Regelung der Motorspannung ($U_M$) auf einen Drehzahlsollwert ($n_S$) zu regeln, der derart vorgegeben wird, dass er die Maximaldrehzahl des Stellmotors (3) nicht überschreitet.

12. Verwendung gleicher elektrischer Stellmotoren (3) bei mehreren Stellvorrichtungen (1) für jeweils ein bewegbares Fahrzeugteil (2),

- wobei jede der Stellvorrichtungen (1) zusätzlich zu jeweils einem der Stellmotoren (3) eine abtriebsseitig mit diesem Stellmotor (3) gekoppelte Stellmechanik (4) und eine Steuereinheit (12) zur Ansteuerung des Stellmotors (3) mit einem Motorstrom ($I_M$) umfasst,

- wobei sich die Stellvorrichtungen (1) durch das Maximallastmoment ($M_L$) der jeweils zugeordneten Stellmechanik (4) unterscheiden,

- wobei die Stellmotoren (3) derart ausgelegt sind, dass sie bei kontinuierlicher Ansteuerung mit einer Maximalbetriebsspannung jeweils ein Blockdrehmoment ($D_B$) aufweisen, das ein Maximallastmoment ($M_L$) der Stellmechanik (4) mindestens einer der Stellvorrichtungen (1) übersteigt, und

- wobei die Steuereinheiten (12) dazu eingerichtet sind, das Motordrehmoment (D) des jeweiligen Stellmotors (3) durch Begrenzung des Motorstroms ($I_M$) auf einen Drehmomentgrenzwert ($D_G$) zu begrenzen, der für jede der Stellvorrichtungen (1) spezifisch derart vorgegeben ist, dass er das Maximallastmoment ($M_L$) der Stellmechanik (4) dieser Stellvorrichtung (1) nicht überschreitet.

13. Verwendung gleicher elektrischer Stellmotoren (3) bei mehreren Stellvorrichtungen (1) für jeweils ein bewegbares Fahrzeugteil (2),

- wobei jede der Stellvorrichtungen (1) zusätzlich zu einem der elektrischen Stellmotoren (3) eine abtriebsseitig mit diesem Stellmotor (3) gekoppelte Stellmechanik (4) und eine Steuereinheit (12) zur Ansteuerung des Stellmotors (3) mit einem Motorstrom ($I_M$) umfasst,

- wobei sich die Stellvorrichtungen (1) durch die Maximaldrehzahl (n) der jeweils zugeordneten Stellmechanik (4) unterscheiden,

- wobei die Stellmotoren (3) derart ausgelegt sind, dass sie bei kontinuierlicher Ansteuerung mit einer Maximalbetriebsspannung jeweils eine Leerlaufdrehzahl ($n_L$) aufweisen, die die Maximaldrehzahl ($n_m$) der Stellmechanik (4) mindestens einer der Stellvorrichtungen (1) überschreitet, und

- wobei die Steuereinheiten (12) dazu eingerichtet sind, die Motordrehzahl (n) des jeweiligen Stellmotors (3) durch Regelung der Motorspannung ($U_M$) auf einen Drehzahlsollwert ($n_S$) zu regeln, der für jede der Stellvorrichtungen (1) spezifisch derart vorgegeben ist, dass er die Maximaldrehzahl ($n_m$) der Stellmechanik (4) dieser Stellvorrichtung (1) nicht überschreitet.

14. Verwendung nach Anspruch 11 oder 12,

- wobei jeder der Stellmotoren (3) derart ausgelegt ist, dass er bei kontinuierlicher Ansteuerung mit einer Maximalbetriebsspannung eine Leerlaufdrehzahl ($n_L$) aufweist, die die Maximaldrehzahl des Stellmotors (3) überschreitet, und

- wobei die Steuereinheiten (12) dazu eingerichtet sind, die Motordrehzahl (n) des jeweiligen Stellmotors (3) durch Regelung der Motorspannung ($U_M$) auf einen Drehzahlsollwert ($n_S$) zu regeln, der derart vorgegeben ist, dass er die Maximaldrehzahl des Stellmotors (3) nicht überschreitet.

Fig. 1

Fig. 2

Fig. 3

Fig. 4

Europäisches
Patentamt

European
Patent Office

Office européen
des brevets

**EUROPÄISCHER RECHERCHENBERICHT**

Nummer der Anmeldung

EP 18 19 9658

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 198 23 376 A1 (BROSE FAHRZEUGTEILE [DE]) 25. November 1999 (1999-11-25)<br>* Spalte 1, Zeile 6 - Zeile 11; Ansprüche 1-4,8; Abbildungen 1,2,3,5,6,7 *<br>* Spalte 5, Zeile 64 - Spalte 6, Zeile 17 *<br>* Spalte 8, Zeile 66 - Spalte 9, Zeile 45 *<br>* Spalte 8, Zeile 7 - Zeile 53 *<br>* Spalte 1, Zeile 33 - Zeile 50 *<br>* Spalte 4, Zeile 18 - Zeile 34 *<br>----- | 1,5-8<br><br>2-4,9-14 | INV.<br>H02P29/032<br>E05F15/695<br><br>ADD.<br>H02P7/29<br>E05F11/48 |
| X<br>Y | DE 37 31 469 A1 (SIEMENS AG [DE]) 6. April 1989 (1989-04-06)<br>* Spalte 2, Zeile 25 - Zeile 40; Abbildungen 1,2 *<br>* Spalte 3, Zeile 61 - Zeile 68 *<br>* Spalte 4, Zeile 6 - Zeile 59 *<br>* Spalte 5, Zeile 10 - Zeile 22 *<br>----- | 1,8<br><br>2-4,9-14 | |
| Y | DE 196 15 581 A1 (BAYERISCHE MOTOREN WERKE AG [DE]) 23. Oktober 1997 (1997-10-23)<br>* Spalte 1, Zeile 31 - Zeile 68; Abbildung 2 *<br>* Spalte 2, Zeile 47 - Spalte 3, Zeile 12 *<br>* Spalte 2, Zeile 1 - Zeile 12 *<br>----- | 2-4,9-14 | **RECHERCHIERTE SACHGEBIETE (IPC)**<br><br>H02P<br>E05F<br>H02H |
| A | DE 10 2007 062721 A1 (BOSCH GMBH ROBERT [DE]) 2. Juli 2009 (2009-07-02)<br>* Absatz [0002] - Absatz [0012]; Abbildungen 1-3,6,7 *<br>* Absatz [0033] - Absatz [0060] *<br>----- | 1-14 | |

Der vorliegende Recherchenbericht wurde für alle Patentansprüche erstellt

| Recherchenort | Abschlußdatum der Recherche | Prüfer |
|---|---|---|
| München | 26. März 2019 | Batev, Petio |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 9658

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-03-2019

| Im Recherchenbericht angeführtes Patentdokument | Datum der Veröffentlichung | Mitglied(er) der Patentfamilie | Datum der Veröffentlichung |
|---|---|---|---|
| DE 19823376 A1 | 25-11-1999 | KEINE | |
| DE 3731469 A1 | 06-04-1989 | KEINE | |
| DE 19615581 A1 | 23-10-1997 | KEINE | |
| DE 102007062721 A1 | 02-07-2009 | AT 542288 T<br>CN 101911469 A<br>DE 102007062721 A1<br>EP 2238681 A1<br>WO 2009083313 A1 | 15-02-2012<br>08-12-2010<br>02-07-2009<br>13-10-2010<br>09-07-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 19711979 A1